# EUROPEAN PATENT APPLICATION

(11) **EP 4 012 921 A1**
(43) Date of publication of application: **15.06.2022**
(21) Application number: 20213283.3
(22) Date of filing: 11.12.2020
(51) Int. Cl.: H02S 20/32, F24S 40/20, H02S 40/10

(54) **SYSTEM AND METHOD FOR MAXIMIZING POWER OUTPUT IN SOLAR PLANTS AND SOLAR TRACKER THEREOF**

(71) Applicant: Soltec Innovations S.L., 30500 Molina de Segura Murcia (ES)
(72) Inventor: Conesa Rodríguez, Alejandro, 30500 Molina de Segura (ES); GUERRERO PÉREZ, JAVIER, 30500 Molina de Segura (ES); Teruel Hernández, José Alfonso, 30500 Molina de Segura (ES); Carpio Obre, Francisco Javier, 30500 Molina de Segura (ES)
(74) Representative: Isern Patentes y Marcas S.L.

(57) **Abstract**

Solar plants are based on the conversion of sun light power into electricity; to do so, solar cells are mainly used nowadays. Solar cells need to be arranged in such a way sun light hits the face of the solar panel bearing the solar cells, furthermore, said solar cells must be clean so no substance blocks sunlight. The object of the invention hereby provided encompasses a system for maximizing power output in solar plants and a method for maximizing power output in solar plants both based on the deployment of two irradiation sensor, specifically arranged at a certain solar tracker of the solar plant, that caption irradiation levels and generate readings of said irradiation levels when the solar panel is operated by the solar tracker following the sun path.

## Description

### OBJECT OF THE INVENTION

The invention relates to the technical field of renewable energies and more particularly to solar energy.

The object of the invention is directed to maximizing power output generated by solar cells in solar panels driven by solar trackers.

### BACKGROUND ART

Solar power generation is based on the conversion of solar energy, solar irradiance, into electrical power, mainly but not exclusively, by means of solar cells. Solar cells are also called photovoltaics or PV cells, regardless of whether the source is sunlight or artificial light. In addition to generating energy, they can also be used as a photodetector (e.g. infrared detectors), to detect light or other electromagnetic radiation in the vicinity of the visible range, or to measure the intensity of light.

A solar cell or photovoltaic cell is defined by an electrical device that converts the energy of light directly into electricity through the photovoltaic effect, which is a physical and chemical phenomenon. It is a form of a photocell that defines a device whose electrical properties, such as current, voltage or resistance, vary when exposed to light. Individual solar cell devices are often the electrical components of photovoltaic modules, colloquially known as solar modules. The operation of a photovoltaic cell requires three basic properties: absorption of light, producing either electron-hole pairs or excitons, separation of charge carriers of opposite types and separate extraction of these carriers to an external circuit.

To get photovoltaic cells, produce a maximum output power level those three properties must be assured. Solar light absorption accounts for a major requirement when high out power levels are required; to assure high levels of solar light absorption, high levels of solar light must be sought. This means that photovoltaic cells must be properly arranged and set up so solar irradiation levels are maximized, consequently optimizing irradiance levels.

Solar tracked systems move along a certain path, normally a circumference, following the sun; hence irradiance levels are meant to be kept during daylight.

To keep said levels, solar panels, and consequently photovoltaic cells, are positioned and re-positioned according to irradiation levels feeding them, problem is to measure irradiation levels over the entire circumference of rotation with high precision and reliability. To date, all systems that measure irradiation do so in a fixed position.

Nowadays, this position may be actuated manually, but the orientation is in no way automated. Radiation systems can also be implemented on the surface of trackers and make them move simultaneously, but again; in no case can their movement be automated. Known systems use pyranometers, being a type of actinometer used for measuring solar irradiance on a planar surface by determining solar radiation flux density (W/m²) from the hemisphere above within a wavelength range. Pyranometers can be oriented using a manual adjustable tilt accessory, but unfortunately, they are not suitable for automated orientation.

Some solutions have posed, such the one disclosed by CN203396709U, where a multichannel narrow-waveband spectrum albedo measuring device is provided. The spectrum albedo measuring device comprises a shell, an upward observation sensor and a downward observation sensor, wherein the upward observation sensor and the downward observation sensor are arranged at the top and the bottom of the shell respectively; each of the upward observation sensor and the downward observation sensor comprises a cosine corrector, an optical filter and a detector; in the upward observation sensor, the cosine corrector, the optical filter and the detector are arranged in sequence from top to bottom; in the downward observation sensor, the cosine corrector, the optical filter and the detector are arranged in sequence from bottom to top. According to the multichannel narrow-waveband spectrum albedo measuring device, a narrow-waveband spectrum albedo consistent to a satellite sensor spectrum response can be determined accurately, so as to provide direct verification equipment and data for the verification of satellite product; the adopted cosine correctors can effectively reduce the cosine error of the sensors; the upper and lower sensors which are integrated are arranged, so that equipment is simplified, is waterproof and is convenient to mount.

### SUMMARY OF THE INVENTION

The object of the invention solves the problem of automatically measuring solar spectrum and irradiance, especially when time periods are short since both magnitudes are dependent on, at least, time, irradiation levels and orientation angle. This is grounded on the fact that time periods above approximately four minutes do not assure that the sun position has varied less than one degree and, since solar trackers make little correction movements every 30 seconds/1 minute in the early and latter hours of day; the faster the measurements in all angles are made, the easier to apply these measurements to the movement of the solar tracker in these periods.

The object of the invention allows maximizing power output in solar plants by providing precise measurements throughout the day measuring irradiation levels over the entire circumference of rotation with high precision and reliability.

One aspect of the object of the invention is defined by a solar tracker system for maximizing power output in solar plants, that allows rotation. Said solar tracker system being equipped with irradiation sensors able to collect information on irradiation levels, preferably at all angles, during a period of time such that the position of the sun can be considered to be at a fixed position, said period of time preferably being less than 4 minutes.

Irradiation is sensitive to transmittance, hence any substance may compromise irradiation levels and irradiance measurement accuracy; therefore the system of the object of the invention is provided with a cleaning system configured to keep the irradiation sensors clean preventing any type of dirt from interfering with the measurement. Irradiation sensor measurements are cross-checked in such a way that the system of the invention provides self-calibration features by miscoordination between the measurements carried out by at least a pair of irradiation sensors. This redundant system allows the system itself to act accordingly, first cleaning the irradiation sensors and, if the problem persists, notifying a failure that may be regarded as irradiation sensor malfunction, motor rotation errors, etc; but not to the irradiation sensors being partially blocked by material on their sensing surface.

The measurement of irradiation in the entire circumference of rotation allows to know the albedo of the ground for certain angles. On the other hand, the implementation of a camera provides real-time images of the ground which can be quickly correlated with the albedo information, allowing the concepts of visual state and albedo of the soil to be linked instantly.

It is a further object of the invention a solar tracker comprising a system for maximizing power output in solar plants as the system described hereby.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- Shows a front a three-dimensional isometric view of the system of the invention where the self-cleaning module sensors is depicted.
Figure 2.- Shows a side a three-dimensional isometric view of the system of the invention where the irradiation sensors are depicted in a "back to back" arrangement.

### DETAILED DESCRIPTION

To enable those skilled in the relevant art to make and use the invention without undue experimentation, a detailed description of the object of the invention is hereby provided for a representative solar tracker associated to a solar panel.

In a preferred embodiment of a first aspect of the invention a system for maximizing power output in solar plants is provided; the system is preferably arranged fixed in a coaxial arrangement to the longitudinal axis of a torque tube (4) of the representative solar tracker. This can be accomplished by fixing the shaft (3) to the ground by means of a vertical tube (1) arranged contiguous to a post of the representative solar tracker in such a way a shaft (3) is coaxially arranged to the torque tube (4) of the representative solar tracker. Said shaft (3) may be preferably driven by a shaft driving motor (31) configured to turn the shaft (3). The shaft (3) comprises, jointly associated thereto, at least two radiation sensors (2), such as calibrated cells or pyranometers, arranged in a "back-to-back" arrangement; the length of the shaft (3) is that allowing to clear the ground below the radiation sensors (2), said shaft (3) length can be calculated by getting a value providing a shadow free 120° vision cone to the ground by one of the radiation sensors (2) that is pointing to the ground. Movement is driven by the shaft driving motor (31) configured to turn the shaft (3) hence consequently turning the radiation sensors (2) attached thereto; being a complete turn preferably accomplished in less than four minutes to be able to approximate a fixed position of the sun. In alternative embodiment of the object of the invention the turn movement of the shaft (3) is driven by any means driving the torque tube (4) to which the shaft (3) is attached.

In an alternative embodiment of the system of the invention, a system for maximizing power output in solar plants is provided wherein the shaft (3), which is coaxially arranged to the torque tube (4), is jointly fixed to said torque tube (4) in such a way that the shaft turning motor (31) drives the shaft (3) avoiding the deployment of the vertical post and/or the shaft driving motor (31) configured to turn the shaft (3).

The shaft turning motor (31) is always present in any aspect of the object of the invention no matter the embodiment (being the shaft (3) either fixed to the torque tube (4) or independently arranged on the vertical tube (1)). This means that the movement of the shaft (3), and the subsequent movement of the associated radiation sensors (2) arranged therein, is completely different and independent from the turn movement of the solar tracker. If the shaft (3) is found to be fixed to the solar tracker torque tube (4), then the movement made by shaft turning motor (31) has to be driven considering the movement of the solar tracker.

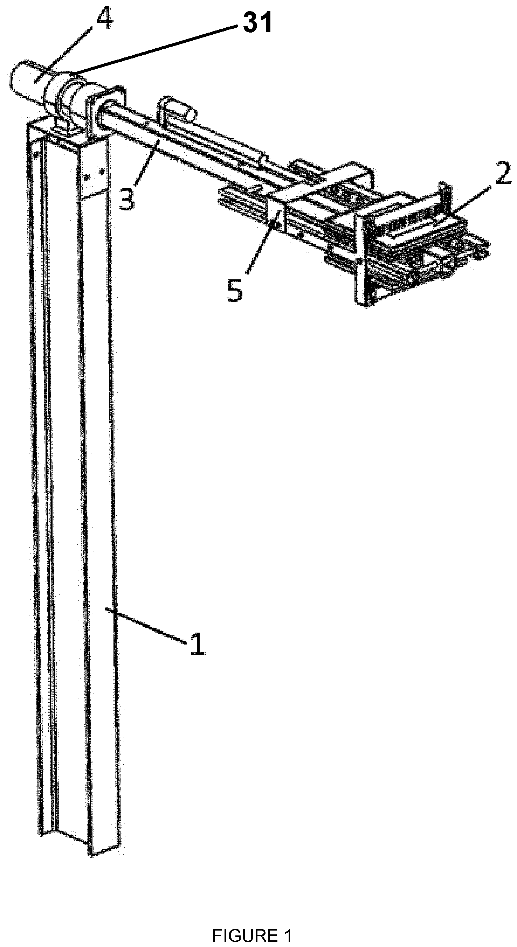

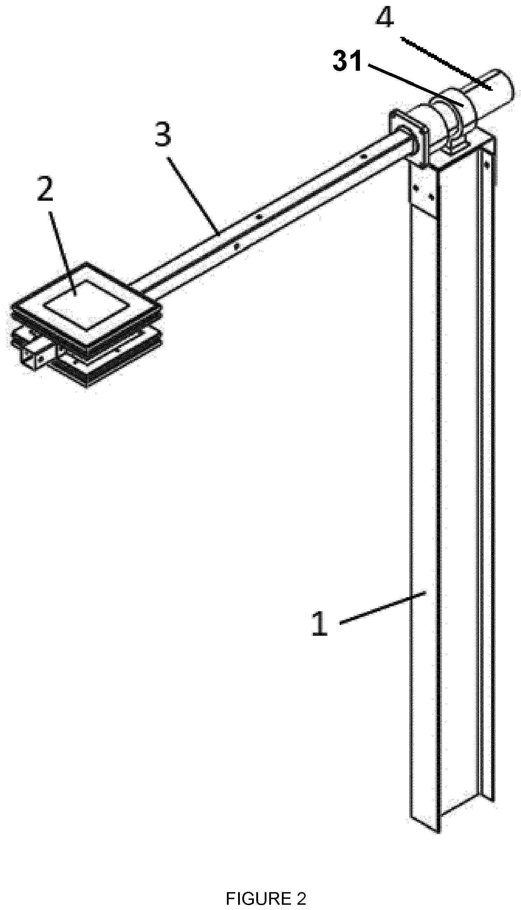

As per figures 1 and 2, in a preferred embodiment of the invention the system for maximizing power output in solar plants of the invention comprises the vertical tube (1) of a height essentially equal to that of the solar tracker so that irradiation in the entire circumference of rotation of the torque tube (4) is measured. The shaft (3) is preferably arranged in a horizontal position, that is 0° respect to the ground, in a preferred embodiment of the invention the shaft (3) is coaxial to the torque tube (4) of the representative solar tracker.

The system of the invention may be further equipped with a motion sensor, such as an inclinometer, configured to measure the angle of rotation of at least one of the shaft (3) or the torque tube (4), at any given time.

Radiation sensors (2) measurements will be carried out with high precision and reliability, for it the system of the invention may comprise an integrated self-cleaning module (5) to keep radiation sensors (2) clean and being preferably arranged on the shaft (3), such as automated brushes or a system with water jets. Due to the specific arrangement of the self-cleaning module (5), preferably arranged on the shaft (3), damages due to misalignments or a lack of coordination of the angle of rotation are avoided.

Cleaning procedures will be preferably carried out at least twice a day, avoiding the first hours of the day due to the formation of dew which mixed with dirt may result in mud that may require higher cleaning resources not envisaged by the self-cleaning module (5) depicted in Figure 1, where it is represented a vertical tube (1) of height equal to that of the solar trackers of the plant to be installed and the shaft (3) holding the turning motor, the at least two radiation sensors (2) and the self-cleaning module (5).

Additionally, an optional procedure may be provided, said procedure comprising comparing measurements from one of the radiation sensors (2) to another when passing through the same position after a 180° turn; should these measurements differ beyond a tolerance threshold determined by the manufacturer, or should the measure of radiation during the day monotonically decrease with no apparent reason; then, an extra cleaning procedure may be triggered. For example, cleaning frequency is set to twice per day but during a few days this measure is decreasing, so frequency requires a readjustment, i.e. abrupt decrease may be caused by winds carrying too much sand, then the self-cleaning module (5) should be activated. Should the problem persist, a notice addressed to the solar plant maintenance services will be generated.

## Claims

1. A system for maximizing power output in solar plants, **characterised by** being arranged on a shaft (3) fixed in a coaxial arrangement to the longitudinal axis of a torque tube (4) of a representative solar tracker of the solar plant, said representative solar tracker being associated to a solar panel, being the system characterised comprising:
• at least one pair of radiation sensors (2) arranged in a back-to-back position and configured to rotate by the turn of the shaft (3) driven by a shaft turning motor (31), so that radiation in the entire circumference of rotation is measured during a period of time such that the position of the sun can be considered to be at a fixed position,
• a shaft driving motor (31) configured to turn the shaft (3), and
• a self-cleaning module (5) arranged on the shaft (3) and configured to clean the solar radiation sensors (2).

2. The system for maximizing power output in solar plants of claim 1, further comprising a motion sensor to measure rotation angle.

3. The system for maximizing power output in solar plants of either claim 1 or 2, wherein the irradiation sensors are calibrated cells or pyranometers.

4. The system for maximizing power output in solar plants of any one of claims 1 to 3, further comprising a temperature sensor configured to measure ambient temperature.

5. The system for maximizing power output in solar plants of any one of claims 1 to 4, wherein the period of time is less than 4 minutes.

6. The system for maximizing power output in solar plants of any one of claims 1 to 5, wherein the representative solar tracker of the solar plant is located on the perimeter solar plant, to avoid shades produced by any element of the solar plant.

7. The system for maximizing power output in solar plants of any one of claims 1 to 6 wherein the shaft (3) is arranged at an end of the torque tube (4).

8. The system for maximizing power output in solar plants of any one of claims 1 to 7 wherein the shaft (3) is fixed to the ground by means of a vertical tube (1) arranged contiguous to a post of the representative solar tracker in such a way a shaft (3) is coaxially arranged to the torque tube (4) of the representative solar tracker.

9. A method for maximizing power output in solar plants, the method being **characterised by** comprising:
• comparing measurements carried out by one pair of radiation sensors (2) arranged on a shaft (3) coaxially fixed to the torque tube (4) of a said radiation sensors (2) being arranged in a "back to back" position and rotating on the shaft (3) so that radiation in the entire circumference of rotation is measured during a period of time such that the position of the sun can be considered to be at a fixed position; and
• commanding a cleaning procedure to be carried out by self-cleaning module (5), configured to clean he radiation sensors (2) when the respective measurements of the radiation sensors (2) differ beyond a tolerance threshold or their values decrease.

10. The method for maximizing power output in solar plants of claim 9, wherein the cleaning procedure is further triggered at least at dawn so that dew formation occurring at first hours of the day is avoided.

11. The method for maximizing power output in solar plants of either one of claims 9 or 10, wherein the period of time is less than 4 minutes.

12. The method for maximizing power output in solar plants of any one of claims 9 to 11, wherein the representative solar tracker of the solar plant is located at on the perimeter of the solar plant, to avoid shades produced by any element of the solar plant.

13. The method for maximizing power output in solar plants of any one of claims 9 to 12, wherein the shaft (3) is fixed to the solar tracker torque tube (4) the method comprising the movement made by a shaft turning motor (31) to be carried out considering the movement of the solar tracker.

14. A solar tracker comprising a system for maximizing power output in solar plants of any one of claims 1 to 8.
